# EUROPÄISCHE PATENTSCHRIFT

(11) **EP 2 818 680 B1**
(45) Veröffentlichungstag und Bekanntmachung des Hinweises auf die Patenterteilung: **23.08.2017**
(21) Anmeldenummer: 14173313.9
(22) Anmeldetag: 20.06.2014
(51) Int. Cl.: F02M 21/02, F16K 31/06

(54) **Magnetventil und Verfahren zur Herstellung von Magnetventilen**
Solenoid valve, and method for producing solenoid valves
Électrovanne et procédé de fabrication d'électrovannes

(30) Priorität: 28.06.2013 DE 102013212681
(43) Veröffentlichungstag der Anmeldung: 31.12.2014
(73) Patentinhaber: ROBERT BOSCH GMBH, 70442 Stuttgart (DE)
(72) Erfinder: Foerster, Juergen, 74379 Ingersheim (DE); Kroeger, Kai, 82008 Unterhaching (DE); Venekamp, Okke, 83122 Samerberg (DE); Dirnberger, Stephan, 85540 Haar (DE)

(56) Entgegenhaltungen:
- WO-A1-2005/043016
- DE-A1-102007 002 841
- DE-A1-102007 003 213

## Beschreibung

Die Erfindung betrifft ein Magnetventil zum Eindosieren eines Fluids in einen Ansaugtrakt eines Motors mit den Merkmalen des Oberbegriffs des Anspruchs 1. Ferner betrifft die Erfindung ein Verfahren zur Herstellung einer Reihe von Magnetventilen, die sich hinsichtlich ihres maximalen Durchflusses unterscheiden.

### Stand der Technik

Ein Beispiel für den Einsatz ein Magnetventil als Dosierventil wird in WO 2005/043016 offenbart. Das angegebene Magnetventil soll insbesondere als Dosierventil für ein gasförmiges Medium, vorzugsweise für einen gasförmigen Brennstoff, einsetzbar sein. Im Vordergrund steht ferner der Einsatz in Großmotoren. Die bei Großmotoren üblicherweise geforderten Massenströme bis 3000 kg/h erfordern verhältnismäßig große Öffnungsquerschnitte der hierin eingesetzten Dosierventile. In niedrigen Lastbereichen müssen über die Dosierventile zugleich kleine Dosiermengen darstellbar sein, was eine hohe Schaltdynamik voraussetzt. Um diese realisieren zu können, gilt es die Schaltkräfte so gering wie möglich zu halten. In der Regel finden daher druckausgeglichene Ventile Einsatz.

Ein druckausgeglichenes elektromagnetisch betätigbares Ventil für den Einsatz in Großmotoren geht beispielhaft aus der Patentschrift US 8,272,399 B2 hervor. Es umfasst eine Magnetbaugruppe, einen mit der Magnetbaugruppe zusammenwirkenden hubbeweglichen Anker und einen mit dem Anker verbundenen hubbeweglichen Ventilteller zum Freigeben und Verschließen mehrerer schlitzartiger Durchströmöffnungen in einer Ventilplatte. Der hubbewegliche Ventilteller weist ebenfalls schlitzartige Durchströmöffnungen auf, zwischen denen eine Dichtfläche verbleibt, die zur Abdichtung eines Ventilraums gegenüber einem außerhalb des Ventils liegenden Druckraum in Überdeckung mit den Durchströmöffnungen der Ventilplatte bringbar ist. Der außerhalb des Ventils liegende Druckraum ist über eine zentrale Druckausgleichsbohrung, welche die Ventilplatte und den Ventilteller durchsetzt, mit einem Druckausgleichsraum verbunden, so dass im Druckausgleichsraum und im Druckraum der gleiche Druck herrscht, der eine auf den Anker in Schließrichtung wirkende und eine auf den Ventilteller in Öffnungsrichtung wirkende Druckkraft erzeugt. Zugleich liegt am Anker und am Ventilteller der im Ventilraum herrschende Druck an, der eine auf den Ventilteller in Schließrichtung wirkende und eine auf den Anker in Öffnungsrichtung wirkende Druckkraft erzeugt. Die druckbeaufschlagten Flächen sind dabei derart gewählt, dass die beweglichen Bauteile, nämlich der Anker und der Ventilteller, in Schließstellung im Wesentlichen druckausgeglichen sind. Der Druckausgleich hat zur Folge, dass die erforderlichen Schaltkräfte deutlich verringert werden.

Derartige druckausgeglichene Ventile weisen jedoch den Nachteil auf, dass sich mit Veränderung der Strömungsquerschnitte der in der Ventilplatte vorgesehenen Durchströmöffnungen auch die für den Druckausgleich relevanten Flächen verändern. Eine Veränderung der Strömungsquerschnitte kann beispielsweise durch kundenspezifische Anforderungen bedingt sein. In der Folge müssen die beweglichen Bauteile und/oder die Magnetbaugruppe neu ausgelegt und aufeinander abgestimmt werden, um den Druckausgleich wieder herzustellen.

Ausgehend von dem vorstehend genannten Stand der Technik liegt daher der vorliegenden Erfindung die Aufgabe zugrunde, ein Magnetventil zum Eindosieren eines Fluids anzugeben, das vom Konzept her in einfacher Weise eine Anpassung an kundenspezifische Anforderungen ermöglicht.

Zur Lösung der Aufgabe wird das Magnetventil mit den Merkmalen des Anspruchs 1 vorgeschlagen. Vorteilhafte Weiterbildungen der Erfindung sind in den jeweiligen Unteransprüchen angegeben. Ferner wird ein Verfahren zur Herstellung eines solchen Magnetventils vorgeschlagen.

### Offenbarung der Erfindung

Das zum Eindosieren eines Fluids in einen Ansaugtrakt eines Motors vorgeschlagene Magnetventil umfasst eine Magnetbaugruppe, einen mit der Magnetbaugruppe zusammenwirkenden Anker und einen mit dem Anker verbundenen, hubbeweglichen Ventilteller zum Freigeben und Verschließen wenigstens einer in einer Ventilplatte ausgebildeten Durchströmöffnung. Erfindungsgemäß mündet die Durchströmöffnung in eine Ausnehmung einer dem Ventilteller zugewandten Stirnfläche der Ventilplatte. Ferner erfindungsgemäß liegt der Ausnehmung eine Dichtfläche des Ventiltellers zur Abdichtung der Ausnehmung gegenüber einem Ventilraum gegenüber. In Schließstellung des Ventils liegt demnach an der in Überdeckung mit der Ausnehmung der Ventilplatte bringbaren Dichtfläche des Ventiltellers der im Ansaugtrakt herrschende Druck p₂ an, der kleiner als ein im Ventilraum herrschender Druck p₁ ist. Die Größe des Überdeckungsbereichs bestimmt dabei die aus dem Druck p₂ resultierende und auf den Ventilteller in Öffnungsrichtung wirkende Druckkraft. Dies gilt unabhängig davon, wie groß der Strömungsquerschnitt der wenigstens einen in die Ausnehmung mündenden Durchströmöffnung ist, so dass dieser beliebig wählbar ist. Der Strömungsquerschnitt der wenigstens einen Durchströmöffnung, welche die Ausnehmung mit dem Ansaugtrakt fluidisch verbindet, muss lediglich einen ausreichend schnellen Druckausgleich zwischen dem Ansaugtrakt und der Ausnehmung ermöglichen. Denn es gilt sicherzustellen, dass der Druckausgleich zwischen dem Druck in der Ausnehmung und dem Druck im Ansaugtrakt vor dem nächsten Öffnen des Ventils erfolgt ist.

Indem der Strömungsquerschnitt der in die Ausnehmung mündenden Durchströmöffnung der Ventilplatte beliebig wählbar ist, kann der Öffnungsquerschnitt bzw. Ventildurchfluss in einfacher Weise an die jeweiligen kundenspezifischen Anforderungen angepasst werden. Zur Darstellung einer Vielzahl verschiedener Ventile mit unterschiedlichen Öffnungsquerschnitten bzw. Durchflüssen bedarf es demnach lediglich der Vorhaltung einer entsprechenden Vielzahl an Ventilplatten, die sich im Hinblick auf den Strömungsquerschnitt der wenigstens einen Durchströmöffnung unterscheiden. Im Übrigen können die gleichen Bauteile verwendet werden, so dass allein der Austausch der Ventilplatte eine große Spreizung der Öffnungsquerschnitte bzw. Durchflüsse ermöglicht. Der Austausch der Ventilplatte bleibt dabei ohne Einfluss auf einen etwaigen über die druckbeaufschlagten Flächen am Anker und am Ventilteller bewirkten Druckausgleich.

In einer Grundauslegung kann das Ventil beispielsweise für einen Massenstrom von 3000kg/h ausgelegt werden. In Abhängigkeit von der Anzahl, der Anordnung, der Form und/oder der Größe der wenigstens einen Durchströmöffnung der jeweils eingesetzten Ventilplatte kann der Durchfluss in verschiedenen Stufen reduziert werden, ohne dabei die anderen Wirkkomponenten anpassen zu müssen. Insbesondere können das Ventilgehäuse, die Magnetbaugruppe, der Anker und/oder der Ventilteller unverändert bleiben. Mit einem Ventil-Grundtyp, der möglichst viele gleiche Teile umfasst, lassen sich somit viele verschiedene Ventile realisieren, um den jeweiligen Kundenanforderungen gerecht zu werden. Es müssen lediglich verschiedene Ventilplatten vorgehalten werden. Dadurch bleiben Entwicklungs-, Herstellungs- und Lagerhaltungskosten gering.

Gemäß einer bevorzugten Ausführungsform der Erfindung münden mehrere Durchströmöffnungen in die Ausnehmung. Dies erleichtert den Druckausgleich zwischen dem Ansaugtrakt und der Ausnehmung nach dem Schließen des Ventils, so dass in kürzester Zeit der im Ansaugtrakt herrschende Druck p₂ auch in der Ausnehmung der Ventilplatte herrscht bzw. an der Dichtfläche des Ventiltellers anliegt, welche die Ausnehmung gegenüber dem Ventilraum abdichtet.

Gemäß einer weiteren bevorzugten Ausführungsform der Erfindung sind mehrere Ausnehmungen in der Stirnfläche der Ventilplatte ausgebildet, denen die Dichtfläche des Ventiltellers zur Abdichtung gegenüber dem Ventilraum gegenüber liegt. In jede Ausnehmung mündet dabei wenigstens eine Durchströmöffnung zur fluidischen Verbindung mit dem Ansaugtrakt. Vorzugsweise besitzt jede Ausnehmung in der Draufsicht einen kreisbogenförmigen Verlauf und die mehreren kreisbogenförmig verlaufenden Ausnehmungen sind konzentrisch zueinander angeordnet. Derartige Ausnehmungen sind in einfacher Weise herstellbar.

Des Weiteren wird vorgeschlagen, dass der Ventilteller mehrere Durchströmöffnungen besitzt, die der Stirnfläche der Ventilplatte zur Abdichtung des Ventilraums gegenüber der oder den Ausnehmungen der Ventilplatte gegenüber liegen. Die Durchströmöffnungen des Ventiltellers verlaufen vorzugsweise ebenfalls kreisbogenförmig und sind konzentrisch zueinander angeordnet, wobei die Durchströmöffnungen des Ventiltellers jeweils versetzt zu den Ausnehmungen der Ventilplatte angeordnet sind. Dadurch ist gewährleistet, dass in Schließstellung die Dichtfläche des Ventiltellers den Ventilraum nach außen hin abdichtet.

Vorteilhafterweise sind der Anker und der Ventilteller in Schließstellung im Wesentlichen druckausgeglichen. Das Schalten des Ventils erfordert somit geringe Kräfte, die selbst bei großen Drücken und/oder Massenströmen mittels einer einfachen Magnetbaugruppe darstellbar sind.

Zur Realisierung eines Druckausgleichs in Schließstellung wird vorgeschlagen, dass der Anker und der Ventilteller einander am Ventilraum gegenüberliegende Flächen besitzen, die im Wesentlichen gleich groß sind. Da sich die Flächen des Ankers und des Ventiltellers am Ventilraum gegenüber liegen, liegt hier jeweils der Druck p₁ des Ventilraums an. Indem die Flächen zumindest in etwa gleich groß sind, werden der Anker und der Ventilteller in entgegengesetzter Richtung von einer im Wesentlichen gleich großen Druckkraft beaufschlagt, so dass die Kräfte weitgehend ausgeglichen sind. Die druckbeaufschlagten Flächen am Anker und/oder am Ventilteller können sich dabei auch aus mehreren Teilflächen zusammensetzen.

Bevorzugt begrenzt der Anker über eine Stirnfläche einen Druckraum, der mittels eines Dichtelements gegenüber dem Ventilraum abgedichtet und über Bohrungen des Ventiltellers und der Ventilplatte mit dem Ansaugtrakt fluidisch verbindbar ist. Die Bohrungen des Ventiltellers und der Ventilplatte vermögen auf diese Weise einen Druckausgleich zwischen dem Druckraum und dem Ansaugtrakt herzustellen. Im Betrieb des Ventils herrscht demnach im Druckraum der gleiche Druck wie im Ansaugtrakt. Hieraus resultiert eine auf den Anker in Schließrichtung wirkende Druckkraft, die eine aus dem Druck des Ansaugtraktes resultierende und auf die Dichtfläche des Ventiltellers wirkende Öffnungskraft auszugleichen vermag.

Vorteilhafterweise ist die den Druckraum begrenzende Stirnfläche des Ankers im Wesentlichen gleich groß wie die Dichtfläche des Ventiltellers, die in Überdeckung mit der Ausnehmung bzw. den Ausnehmungen der Ventilplatte bringbar ist, so dass der Anker und der Ventilteller in Schließstellung im Wesentlichen druckausgeglichen sind.

Zur Lösung der eingangs genannten Aufgabe wird ferner ein Verfahren zur Herstellung einer Reihe von Magnetventilen, die sich hinsichtlich ihres maximalen Durchflusses unterscheiden, vorgeschlagen. Bei dem Verfahren wird für jedes Magnetventil eine Ventilplatte aus mehreren vorgehaltenen Ventilplatten, die sich hinsichtlich der Anzahl, Anordnung, Form und/oder Größe wenigstens einer Durchströmöffnung unterscheiden, zur Festlegung des maximalen Durchflusses ausgewählt und mit ansonsten im Wesentlichen gleichen Bauteilen verbaut. Durch Einsatz des erfindungsgemäßen Verfahrens können Entwicklungs-, Herstellungs- und Lagerhaltungskosten reduziert werden, da im Wesentlichen gleiche Bauteile verwendet werden. Lediglich die Ventilplatte wird zur Anpassung des Magnetventils an die jeweiligen kundenspezifischen Anforderungen aus einer Vielzahl von Ventilplatten ausgewählt, die sich im Wesentlichen jedoch nur in Bezug auf den Strömungsquerschnitt der wenigstens einen Durchströmöffnung unterscheiden. Im Übrigen sind die Ventilplatten weitgehend gleich ausgebildet. Sämtliche Ventilplatten können somit mit dem gleichen Gehäuse, dem gleichen Ventilteller, dem gleichen Anker und/oder der gleichen Magnetbaugruppe verbaut werden.

Bevorzugt werden bei dem Verfahren Ventilplatten vorgehalten und verwendet, die in einer Stirnfläche wenigstens eine Ausnehmung besitzen, in welche die Durchströmöffnung mündet. Auf diese Weise hat die Wahl der Ventilplatte keinen Einfluss auf einen etwaigen eingestellten Druck- bzw. Kräfteausgleich an den druckbeaufschlagten Flächen der beweglichen Bauteile.

Bevorzugte Ausführungsformen eines erfindungsgemäßen Magnetventils werden nachfolgend anhand der beigefügten Figuren näher beschrieben. Diese zeigen:
- Figur 1: einen schematischen Längsschnitt durch ein erfindungsgemäßes Magnetventil gemäß einer bevorzugten Ausführungsform,
- Figur 2: einen schematischen Längsschnitt in vergrößerter Darstellung zur Erläuterung des Druck- bzw. Kräfteausgleichs an den beweglichen Bauteilen eines erfindungsgemäßen Magnetventils,
- Figur 3: eine teilweise Draufsicht auf einen Ventilteller eines erfindungsgemäßen Magnetventils,
- Figur 4: eine teilweise Draufsicht auf eine Ventilplatte eines erfindungsgemäßen Magnetventils im Bereich einer Ausnehmung,
- Figur 5: einen schematischen Querschnitt in vergrößerter Darstellung durch eine Ventilplatte und einen Ventilteller eines erfindungsgemäßen Magnetventils im Bereich einer Ausnehmung und einer Durchströmöffnung,
- Figur 6: einen schematischen Längsschnitt durch ein bekanntes Magnetventil und
- Figur 7: einen schematische Längsschnitt durch ein erfindungsgemäßes Magnetventil.

### Ausführliche Beschreibung der Figuren

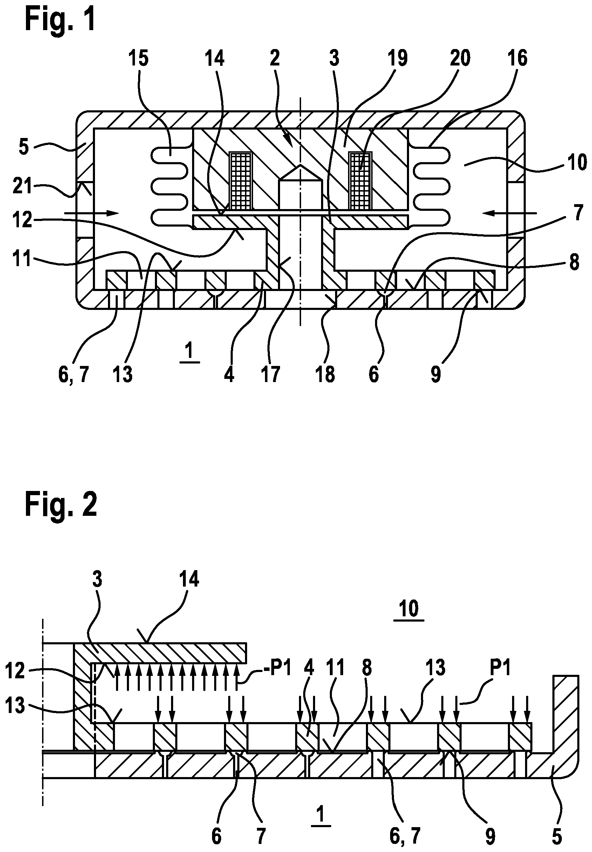

Der Darstellung der Figur 1 ist eine bevorzugte Ausführungsform eines erfindungsgemäßen Magnetventils zu entnehmen. Das Magnetventil umfasst eine zugleich als Gehäuse dienende Ventilplatte 5, in der ein Ventilraum 10 ausgebildet ist. Zur Befüllung des Ventilraums 10 mit einem gasförmigen Medium, insbesondere mit einem gasförmigen Brennstoff, weist die Ventilplatte 5 mehrere Radialbohrungen 21 auf. Das über die Radialbohrungen 21 dem Ventilraum 10 zugeführte gasförmige Medium besitzt einen Druck p₁, wenn es in den Ventilraum 10 gelangt. Außerhalb des Ventils, in einem Ansaugtrakt 1, herrscht ein Druck p₂, der kleiner als der Druck p₁ ist. In Offenstellung des Ventils strömt somit das gasförmige Medium in den Ansaugtrakt 1.

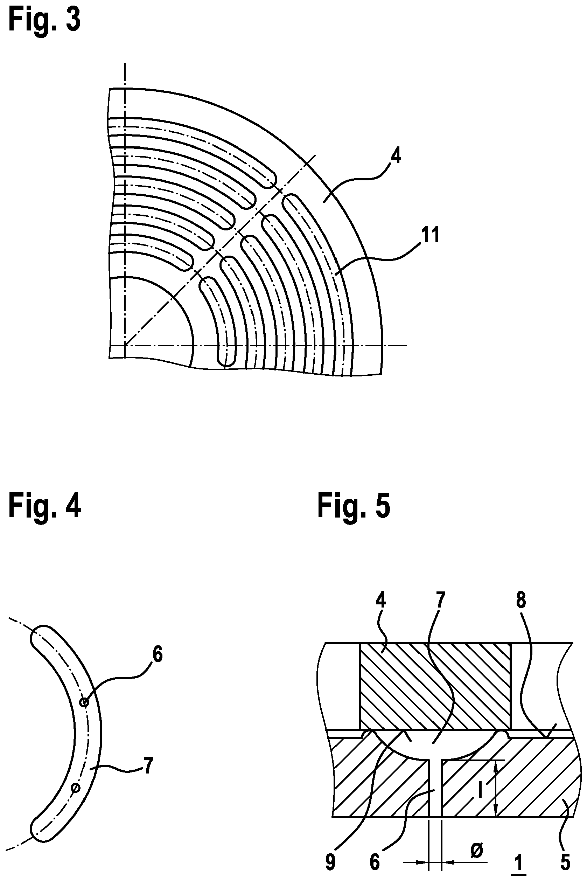

Die Ventilplatte 5 weist mehrere Durchströmöffnungen 6 auf, über welche das gasförmige Medium aus dem Ventilraum 10 in den Ansaugtrakt 1 gelangt, wenn das Ventil geöffnet ist. Zum Freigeben und Verschließen der Durchströmöffnungen 6 ist im Gehäuse ein hubbeweglicher Ventilteller 4 aufgenommen, der mit einem Anker 3 fest verbunden ist. Über eine ferner im Gehäuse aufgenommene Magnetbaugruppe 2 ist der Anker 3 einschließlich des Ventiltellers 4 betätigbar. Denn bei Bestromung einer Magnetspule 20 der Magnetbaugruppe 2 werden der Anker 3 und der Ventilteller 4 in Richtung der Spule 20 gezogen, wobei der Ventilteller 4 von einer als Ventilsitz dienenden Stirnfläche 8 der Ventilplatte 5 abhebt und die Durchströmöffnungen 6 freigibt. Die Magnetspule 20 ist von einem Magnetkern 19 der Magnetbaugruppe 2 umgeben, an dem ein Dichtelement 16 befestigt ist. Das Dichtelement 16 ist zur Ausbildung eines Druckraums 15 ferner am Anker 3 befestigt, so dass das Dichtelement 16 zugleich eine Abdichtung des Druckraums 15 gegenüber dem Ventilraum 10 bewirkt. Über eine zentrale Bohrung 17 im Ventilteller 4 bzw. Anker 3 und eine zentrale Bohrung 18 in der Ventilplatte 5 ist der Druckraum 15 mit dem Ansaugtrakt 1 fluidisch verbunden. Im Druckraum 15 herrscht demnach ebenfalls der Druck p₂. Da der Anker 3 mit einer Stirnfläche 14 den Druckraum 15 in axialer Richtung begrenzt, liegt am Anker 3 druckraumseitig der Druck p₂ an. Ventilraumseitig liegt an einer Fläche 12 des Ankers 3 der Druck p₁ an. Der Fläche 12 liegt am Ventilraum 10 die Fläche 13 des Ventiltellers 4 gegenüber. Die Fläche 13 setzt sich dabei aus mehreren Einzelflächen zusammen, da der Ventilteller 4 von mehreren Durchströmöffnungen 11 durchsetzt wird. Die Anzahl, die Anordnung, die Form und die Größe der Durchströmöffnungen 11 ist dabei auf die der Durchströmöffnungen 6 der Ventilplatte 5 abgestimmt, so dass den Durchströmöffnungen 11 des Ventiltellers 4 die Stirnfläche 8 der Ventilplatte 5 und den Durchströmöffnungen 6 des Ventiltellers 4 eine Dichtfläche 9 des Ventiltellers 4 gegenüber liegen. Vorliegend weisen die Durchströmöffnungen 11 des Ventiltellers 4 einen kreisbogenförmigen Verlauf auf und sind konzentrisch zueinander angeordnet (siehe Figur 3).

Die Durchströmöffnungen 6 der Ventilplatte 5 fallen teilweise mit Ausnehmungen 7 zusammen, die in der Stirnfläche 8 der Ventilplatte 5 ausgebildet sind und somit der Dichtfläche 9 gegenüber liegen. Radial innen liegend sind die Ausnehmungen 7 jedoch nicht durchgehend ausgeführt, sondern bilden einen Druckausgleichsraum aus, der über Durchströmöffnungen 6 mit reduziertem Strömungsquerschnitt fluidisch mit dem Ansaugtrakt 1 verbunden ist. Werden nunmehr - wie in der Figur 2 dargestellt - die vom Druck p₁ beaufschlagten Flächen 12, 13 am Anker 3 und am Ventilteller 4, wobei sich hier die Fläche 13 aus mehreren Teilflächen zusammensetzt, gleich groß gewählt, sind die hieraus auf den Anker 3 und den Ventilteller 4 wirkenden Kräfte ausgeglichen. Ein vollständiger Druck- oder Kräfteausgleich an den beweglichen Bauteilen wird insbesondere hergestellt, wenn die vom Druck p₂ beaufschlagten Flächen ebenfalls gleich groß gewählt sind. Hierbei handelt es sich um die Stirnfläche 14 des Ankers 3 und die Dichtfläche 9 des Ventiltellers 4, welche mit Schließen des Ventils in Überdeckung mit den Durchströmöffnungen 6 bzw. den Ausnehmungen 7 bringbar ist.

Um dieses Flächenverhältnis nicht zu verändern, wenn der Strömungsquerschnitt einzelner Durchströmöffnungen 6 in der Ventilplatte 5 reduziert wird, werden anstelle der Durchströmöffnungen 6 Ausnehmungen 7 vorgesehen. Diese weisen in der Draufsicht die gleichen Abmessungen wie die ursprünglichen Durchströmungsöffnungen 6 auf, erstrecken sich jedoch nicht über die ganze Höhe der Ventilplatte 5. Damit in den Ausnehmungen 7 der Druck p₂ vorherrscht, wenn das Ventil geschlossen ist, so dass weiterhin an der Dichtfläche 9 des Ventiltellers 4 der Druck p₂ anliegt, sind die Ausnehmungen 7 über wenigstens eine Durchströmöffnung 6 mit reduziertem Strömungsquerschnitt mit dem Ansaugtrakt 1 verbunden (siehe Figuren 4 und 5). Bei der dargestellten als Durchströmungsöffnung 6 dienenden kreisrunden Bohrung beträgt der Durchmesser und damit der freie Strömungsquerschnitt beispielsweise 1 mm. Der freie Strömungsquerschnitt und die Länge l der wenigstens einen Durchströmöffnung 6 ist derart zu wählen, dass ein schneller Druckausgleich zwischen der als Druckausgleichsraum dienenden Ausnehmung 7 und dem Ansaugtrakt 1 erfolgt, um auf diese Weise einen Druck- bzw. Kräfteausgleich an den beweglichen Bauteilen herzustellen.

Sofern die Abmessungen der Ausnehmung 7 in der Draufsicht auf die Ventilplatte 5 unverändert bleiben, kann der freie Strömungsquerschnitt der in die Ausnehmung 7 mündenden Durchströmöffnung 6 beliebig geändert werden. Damit kann der Durchfluss des Ventils variiert und an kundenspezifische Anforderungen angepasst werden, ohne dass dies Auswirkungen auf den angestrebten Druck- bzw. Kräfteausgleich an den beweglichen Bauteilen hat. Zur Anpassung des Ventils an die jeweiligen Kundenanforderungen können demnach weitgehend gleiche Bauteile verwendet werden. Es müssen lediglich verschiedene Ventilplatten 5 mit verschiedenen Durchströmungsöffnungen 6 vorgehalten werden.

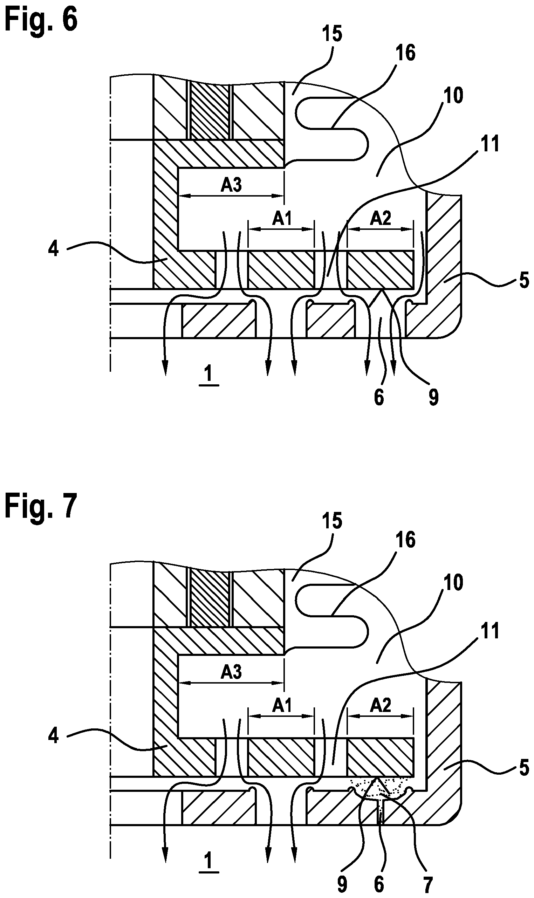

Die Gegenüberstellung der Figuren 6 und 7 zeigt, dass - ausgehend von einem Ventil-Grundtyp entsprechend der Figur 6 - der freie Strömungsquerschnitt der radial innen liegenden Durchströmungsöffnung 6 der Ventilplatte 5 bei gelichzeitiger Anordnung einer Ausnehmung 7 entsprechend der Figur 7 reduziert werden kann, ohne dass sich das Flächenverhältnis an den druckbeaufschlagten Flächen ändert. Wesentlich ist dabei, dass die in den Figuren 6 und 7 als Fläche A₃ bezeichnete Fläche des Ankers 3 in etwa gleich groß der Summe der Teilflächen A₁ und A₂ des Ventiltellers 4 ist.

## Patentansprüche

1. Magnetventil zum Eindosieren eines Fluids in einen Ansaugtrakt (1) eines Motors, umfassend eine Magnetbaugruppe (2), einen mit der Magnetbaugruppe (2) zusammenwirkenden Anker (3) und einen mit dem Anker (3) verbundenen, hubbeweglichen Ventilteller (4) zum Freigeben und Verschließen wenigstens einer in einer Ventilplatte (5) ausgebildeten Durchströmöffnung (6), wobei die Durchströmöffnung (6) in eine Ausnehmung (7) einer dem Ventilteller (4) zugewandten Stirnfläche (8) der Ventilplatte (5) mündet, und der Ausnehmung (7) eine Dichtfläche (9) des Ventiltellers (4) zur Abdichtung der Ausnehmung (7) gegenüber einem Ventilraum (10) gegenüber liegt,
**dadurch gekennzeichnet, dass** der Anker (3) und der Ventilteller (4) in Schließstellung im Wesentlichen druckausgeglichen sind.

2. Magnetventil nach Anspruch 1,
**dadurch gekennzeichnet, dass** mehrere Durchströmöffnungen (6) in die Ausnehmung (7) münden.

3. Magnetventil nach Anspruch 1 oder 2,
**dadurch gekennzeichnet, dass** mehrere Ausnehmungen (7) in der Stirnfläche (8) der Ventilplatte (5) ausgebildet sind, denen die Dichtfläche (9) des Ventiltellers (4) zur Abdichtung gegenüber dem Ventilraum (10) gegenüber liegt, wobei vorzugsweise jede Ausnehmung (7) in der Draufsicht einen kreisbogenförmigen Verlauf besitzt und die mehreren kreisbogenförmig verlaufenden Ausnehmungen (7) konzentrisch zueinander angeordnet sind.

4. Magnetventil nach einem der vorhergehenden Ansprüche,
**dadurch gekennzeichnet, dass** der Ventilteller (4) mehrere Durchströmöffnungen (11) besitzt, die der Stirnfläche (8) der Ventilplatte (5) zur Abdichtung des Ventilraums (10) gegenüber der oder den Ausnehmungen (7) der Ventilplatte (4) gegenüber liegen.

5. Magnetventil nach einem der vorhergehenden Ansprüche,
**dadurch gekennzeichnet, dass** zur Realisierung eines Druckausgleichs in Schließstellung der Anker (3) und der Ventilteller (4) einander am Ventilraum (10) gegenüberliegende Flächen (12, 13) besitzen, die im Wesentlichen gleich groß sind.

6. Magnetventil nach einem der vorhergehenden Ansprüche,
**dadurch gekennzeichnet, dass** der Anker (3) über eine Stirnfläche (14) einen Druckraum (15) begrenzt, der mittels eines Dichtelements (16) gegenüber dem Ventilraum (10) abgedichtet und über Bohrungen (17, 18) des Ventiltellers (4) und der Ventilplatte (5) mit dem Ansaugtrakt (1) fluidisch verbindbar ist.

7. Magnetventil nach Anspruch 6,
**dadurch gekennzeichnet, dass** die den Druckraum (15) begrenzende Stirnfläche (14) des Ankers (3) im Wesentlichen gleich groß wie die Dichtfläche (9) des Ventiltellers (4) ist, die in Überdeckung mit der Ausnehmung (7) bzw. den Ausnehmungen (7) der Ventilplatte (5) bringbar ist, so dass der Anker (3) und der Ventilteller (4) in Schließstellung im Wesentlichen druckausgeglichen sind.

## Claims

1. Solenoid valve for metering a fluid into an intake section (1) of an engine, comprising a magnet assembly (2), an armature (3) which interacts with the magnet assembly (2), and a valve head (4) with a reciprocating movement which is connected to the armature (3) for opening and closing at least one throughflow opening (6) which is configured in a valve plate (5), the throughflow opening (6) opening into a recess (7) of an end face (8) of the valve plate (5), which end face (8) faces the valve head (4), and a sealing face (9) of the valve head (4) lying opposite the recess (7) in order to seal the recess (7) with respect to a valve space (10), **characterized in that** the armature (3) and the valve head (4) are substantially pressure-equalized in the closed position.

2. Solenoid valve according to Claim 1, **characterized in that** a plurality of throughflow openings (6) open into the recess (7).

3. Solenoid valve according to Claim 1 or 2, **characterized in that** a plurality of recesses (7) are configured in the end face (8) of the valve plate (5), the sealing face (9) of the valve head (4) lying opposite the said recesses (7) in order to seal them with respect to the valve space (10), each recess (7) preferably having an arcuate profile in plan view, and the plurality of recesses (7) which run in an arcuate manner being arranged concentrically with respect to one another.

4. Solenoid valve according to one of the preceding claims, **characterized in that** the valve head (4) has a plurality of throughflow openings (11) which lie opposite the end face (8) of the valve plate (5) in order to seal the valve space (10) with respect to the recess or recesses (7) of the valve plate (4).

5. Solenoid valve according to one of the preceding claims, **characterized in that**, in order to achieve pressure equalization in the closed position, the armature (3) and the valve head (4) have faces (12, 13) which lie opposite one another on the valve space (10) and are of substantially identical size.

6. Solenoid valve according to one of the preceding claims, **characterized in that** the armature (3) delimits a pressure space (15) via an end face (14), which pressure space (15) is sealed with respect to the valve space (10) by means of a sealing element (16) and can be connected fluidically to the intake section (1) via bores (17, 18) of the valve head (4) and the valve plate (5).

7. Solenoid valve according to Claim 6, **characterized in that** that end face (14) of the armature (3) which delimits the pressure space (15) is of substantially identical size to the sealing face (9) of the valve head (4), which sealing face (9) can be brought into congruence with the recess (7) or the recesses (7) of the valve plate (5), with the result that the armature (3) and the valve head (4) are substantially pressure-equalized in the closed position.

## Revendications

1. Electrovanne pour le dosage d'un fluide dans un système d'admission (1) d'un moteur, comprenant un module magnétique (2), un induit (3) coopérant avec le module magnétique (2) et un plateau de soupape (4) à mouvement alternatif connecté à l'induit (3) pour ouvrir et fermer au moins une ouverture d'écoulement (6) réalisée dans une plaque de soupape (5), l'ouverture d'écoulement (6) débouchant dans un évidement (7) d'une face frontale (8) de la plaque de soupape (5) tournée vers le plateau de soupape (4), et l'évidement (7) étant opposé à une face d'étanchéité (9) du plateau de soupape (4) pour étanchéifier l'évidement (7) par rapport à un espace de soupape (10),
**caractérisée en ce que** l'induit (3) et le plateau de soupape (4) sont essentiellement compensés en pression dans la position de fermeture.

2. Electrovanne selon la revendication 1,
**caractérisée en ce que** plusieurs ouvertures d'écoulement (6) débouchent dans l'évidement (7).

3. Electrovanne selon la revendication 1 ou 2,
**caractérisée en ce que** plusieurs évidements (7) sont réalisés dans la face frontale (8) de la plaque de soupape (5), en regard desquels est disposée la face d'étanchéité (9) du plateau de soupape (4) pour réaliser l'étanchéité par rapport à l'espace de soupape (10), chaque évidement (7) possédant de préférence, en vue de dessus, une forme en arc de cercle et la pluralité d'évidements (7) s'étendant en forme d'arc de cercle étant disposés concentriquement les uns par rapport aux autres.

4. Électrovanne selon l'une quelconque des revendications précédentes,
**caractérisée en ce que** le plateau de soupape (4) présente plusieurs ouvertures d'écoulement (11) en regard de la face frontale (8) de la plaque de soupape (5) pour réaliser l'étanchéité de l'espace de soupape (10) par rapport à l'évidement ou aux évidements (7) de la plaque de soupape (4).

5. Électrovanne selon l'une quelconque des revendications précédentes,
**caractérisée en ce que** pour réaliser un équilibre de pression dans la position de fermeture, l'induit (3) et le plateau de soupape (4) possèdent des faces (12, 13) en regard l'une de l'autre au niveau de l'espace de soupape (10), lesquelles ont essentiellement les mêmes dimensions.

6. Électrovanne selon l'une quelconque des revendications précédentes,
**caractérisée en ce que** l'induit (3) délimite, par le biais d'une face frontale (14), un espace de pression (15) qui est étanchéifié par rapport à l'espace de soupape (10) au moyen d'un élément d'étanchéité (16) et qui peut être connecté fluidiquement au système d'admission (1) par le biais d'alésages (17, 18) du plateau de soupape (4) et de la plaque de soupape (5).

7. Électrovanne selon la revendication 6,
**caractérisée en ce que** la face frontale (14) de l'induit (3) délimitant l'espace de pression (15) est essentiellement aussi grande que la face d'étanchéité (9) du plateau de soupape (4) qui peut être amenée en coïncidence avec l'évidement (7) ou avec les évidements (7) de la plaque de soupape (5), de telle sorte que l'induit (3) et le plateau de soupape (4) soient essentiellement équilibrés en pression dans la position de fermeture.
